# EUROPÄISCHE PATENTSCHRIFT

(11) **EP 0 983 916 B1**
(45) Veröffentlichungstag und Bekanntmachung des Hinweises auf die Patenterteilung: **22.09.2004**
(21) Anmeldenummer: 99117189.3
(22) Anmeldetag: 01.09.1999
(51) Int. Cl.: B60R 25/00, E05B 49/00

(54) **Schliesssystem, insbesondere für ein Kraftfahrzeug**
Locking system, in particular for a motor vehicle
Système de verrouillage, notamment pour véhicule à moteur

(30) Priorität: 02.09.1998 DE 19840040; 23.06.1999 DE 19928638
(43) Veröffentlichungstag der Anmeldung: 08.03.2000
(73) Patentinhaber: Marquardt GmbH, 78604 Rietheim-Weilheim (DE)
(72) Erfinder: Müller, Karl, 78628 Rottweil-Neufra (DE); Weisser, Dietmar, 78604 Rietheim-Weilheim (DE); Mattes, Johannes, 78567 Fridingen (DE); Stehle, Wolfgang, 78603 Renquishausen (DE)
(74) Vertreter: Patentanwälte Eisele, Otten, Roth & Dobler

(56) Entgegenhaltungen:
- EP-A- 0 673 003
- EP-A- 0 823 520
- DE-A- 4 020 445

## Beschreibung

Die Erfindung betrifft ein Schließsystem nach dem Oberbegriff des Patentanspruchs 1.

Bei erhöhten Sicherheitsanforderungen werden elektronische Schließsysteme verwendet. Insbesondere bei Kraftfahrzeugen werden solche Schließsysteme als Türschließsysteme, Zündschloßsysteme, Lenkradverriegelungen o. dgl. verwendet.

Derartige Schließsysteme sind aus der DE 43 40 260 A1 bekannt. Das Schließsystem besteht aus einer wenigstens zwei Zustände besitzenden Steuereinrichtung zur Ent- und/oder Verriegelung der Autotüren, des Zündschlosses, der Lenkradverriegelung o. dgl., und einem zugehörigen elektronischen Schlüssel. Die Steuereinrichtung und der Schlüssel besitzen zu deren bestimmungsgemäßen Betrieb Mittel zum Senden und/oder Empfangen von Signalen. Im bestimmungsgemäßen Betrieb ist zwischen dem Schlüssel und der Steuereinrichtung wenigstens ein Signal als codiertes Betriebssignal übertragbar, so daß nach positiver Auswertung des übertragenen Betriebssignals und damit bei berechtigtem Schlüssel eine Änderung des Zustandes der Steuereinrichtung bewirkbar ist.

Es sind Fälle denkbar, in denen nichtberechtigte Benutzer abwarten, bis der berechtigte Benutzer nach Verriegeln des Türschließsystems des Kraftfahrzeugs den eigentlichen Wirkbereich für das Schließsystem verlassen hat. Mit Hilfe einer transparenten Elektronik für den Schlüssel und/oder die Steuereinrichtung veranlassen die nichtberechtigten Benutzer ein Senden des Betriebssignals durch den Schlüssel des berechtigten Benutzers, wobei über die transparente Elektronik das Betriebssignal zum Kraftfahrzeug übertragen wird. Dadurch erfolgt ein Entriegeln des Türschließsystems, das der berechtigte Benutzer nicht mehr bemerkt, da er sich bereits in beträchtlicher Entfernung vom Kraftfahrzeug, außerhalb des Wirkbereichs für das Schließsystem befindet. Die nichtberechtigten Benutzer erhalten dadurch Zugang zum Kraftfahrzeug. Für diesen Fall ist somit die Diebstahlsicherheit des Schließsystems beeinträchtigt.

Um ein von außerhalb des Wirkbereichs stammendes Betriebssignal zu erkennen, ist bei einem wiederum aus einer stationären Steuereinrichtung in einem Kraftfahrzeug und einem tragbaren Schlüssel bestehenden Schließsystem gemäß der DE 40 20 445 A1 und dem Oberbegriff des Anspruchs 1 vorgeschlagen, die Laufzeit des Betriebssignals zu bestimmen. Hierzu sendet die stationäre Steuereinrichtung ein Fragecodesignal während einer ersten Zeitdauer. Daraufhin sendet der tragbare Schlüssel ein Antwortcodesignal während einer zweiten Zeitdauer zurück. Für den Eingang des Antwortcodesignals an der stationären Steuereinrichtung wird ein die beiden Zeitdauern umfassendes Zeitfenster bereitgestellt, so daß nur Antwortcodesignale berücksichtigt werden, die innerhalb der vorgegebenen Laufzeit am Kraftfahrzeug eintreffen. Ist das Antwortcodesignal zu berücksichtigen, so wird nach positiver Auswertung des im Antwortcodesignals enthaltenen Codes ein Entsicherungssignal für das Schließsystem erzeugt.

Nachteilig erscheint bei diesem Schließsystem, daß das Zeitfenster eine bestimmte Größe nicht überschreiten darf. Andernfalls kann das mittels einer transparenten Elektronik übertragene Betriebssignal nicht mehr zuverlässig erkannt werden. Das bedingt jedoch, daß die Länge des zu übertragenden Codes beschränkt ist. Ansonsten besteht die Gefahr, daß die Länge des Betriebssignals das Zeitfenster überschreiten könnte, womit fälschlicherweise ein an sich zulässiges Antwortcodesignal nicht berücksichtigt würde. Wegen der beschränkten Länge für den Code ist folglich die Diebstahlsicherheit dieses Schließsystems beeinträchtigt.

Der Erfindung liegt die Aufgabe zugrunde, die Diebstahlsicherheit des Schließsystems weiter zu verbessern.

Diese Aufgabe wird bei einem gattungsgemäßen Schließsystem durch die kennzeichnenden Merkmale des Anspruchs 1 gelöst.

Die Erfindung geht von dem Gedanken aus, anhand der über die Phasenlage oder der Zeitdifferenz ermittelten Laufzeit eines Signals, bei dem es sich beispielsweise um das Betriebssignal selbst handeln kann, festzustellen, ob das Betriebssignal aus dem Wirkbereich oder außerhalb des Wirkbereichs herrührt. Weitere Ausgestaltungen der Erfindung sind Gegenstand der Unteransprüche.

Wie weiter festgestellt wurde, können Toleranzen der im Schlüssel sowie in der Steuereinrichtung vorhandenen Bauteile zu einer Verfälschung der Laufzeitmessung führen. In diesem Fall kann ein von außerhalb des Wirkbereichs stammendes Betriebssignal fälschlicherweise für ein zulässiges Betriebssignal gehalten werden, was wiederum die Diebstahlsicherheit des Schließsystems beeinträchtigen könnte. Zur Abhilfe hierfür ist in einer bevorzugten Weiterbildung der Erfindung vorgeschlagen, daß die jeweils aktuellen internen Laufzeiten des Signals im Schlüssel und/oder in der Steuereinrichtung ermittelt werden, und daß eine Kalibrierung der gesamten Laufzeit des Signals, das in der Art eines "Puls-Antwort"-Verfahrens zwischen dem Schlüssel und der Steuereinrichtung ausgetauscht wird, um die interne Laufzeit erfolgt.

Insbesondere ist es zweckmäßig, wenn für den Kalibrierungslauf im Schlüssel und/oder in der Steuereinrichtung die Hoch- und Herunterlaufzeit des Oszillators und des Zwischenfrequenz-Verstärkers gemessen werden. Die dabei ermittelte Information, nämlich die Kalibrierzeit, kann gegebenenfalls als zeitcodierte Nachricht an die Steuereinrichtung zurückgesendet werden. Während dieser Vorgänge wird die gesendete Kalbrierzeit beispielsweise als Spannung in einer Kapazität gespeichert. Die um die Kalibrierzeit berichtigte Laufzeit für das Signal ergibt sich dann aus der Restladung bzw. Spannung des Kondensators.

Die mit der Erfindung erzielten Vorteile bestehen insbesondere darin, daß eine unberechtigte Betätigung des Schließsystems mit Sicherheit erkannt wird und sich daher auch wirksam verhindern läßt. Außerdem sind Fehlbedienungen des Schließsystems ausgeschlossen. Das erfindungsgemäße Schließsystem steigert daher die Diebstahlsicherheit.

Weiterhin ist vorteilhaft, daß Toleranzen der im Schlüssel sowie in der Steuereinrichtung vorhandenen Bauteile sich nicht auf die Messung der Laufzeit des Signals auswirken. Die Verwendung besonders ausgesuchter Bauteile ist somit nicht nötig, was zu einer Verbilligung des Schließsystems führt. Da die Kalibrierung je nach Erfordernis vorgenommen wird, beispielsweise während des Datenprotokolls bei Austausch des Betriebssignals zwischen dem Schlüssel und der Steuereinrichtung, können sich auch verändernde Umwelteinflüsse, Temperatureinflüsse usw. nicht verfälschend auf die Messung der Laufzeit des Signals auswirken.

Ausführungsbeispiele der Erfindung sind in den Zeichnungen dargestellt und werden im folgenden näher beschrieben.

Es zeigen
- Fig. 1: ein mit einem Schließsystem ausgestattetes Kraftfahrzeug,
- Fig. 2: ein Blockschaltbild für die Steuereinrichtung des Schließsystems,
- Fig. 3: ein Blockschaltbild für den Schlüssel des Schließsystems,
- Fig. 4: ein Ablaufdiagramm für die Laufzeitmessung eines Signals mit Kalibrierung in weiterer Ausgestaltung,
- Fig. 5: ein Zeitdiagramm für die Laufzeitmessung bei einem Schließsystem in noch weiterer Ausgestaltung,
- Fig. 6: das Schließsystem als schematisches Blockdiagramm in nochmals einer weiteren Ausführung,
- Fig. 7: ein Diagramm der übertragenen Betriebssignale beim Schließsystem nach Fig. 6 und
- Fig. 8: ein Blockschaltbild zur näheren Ausbildung der Elektronik einer Steuereinrichtung für das Schließsystem.

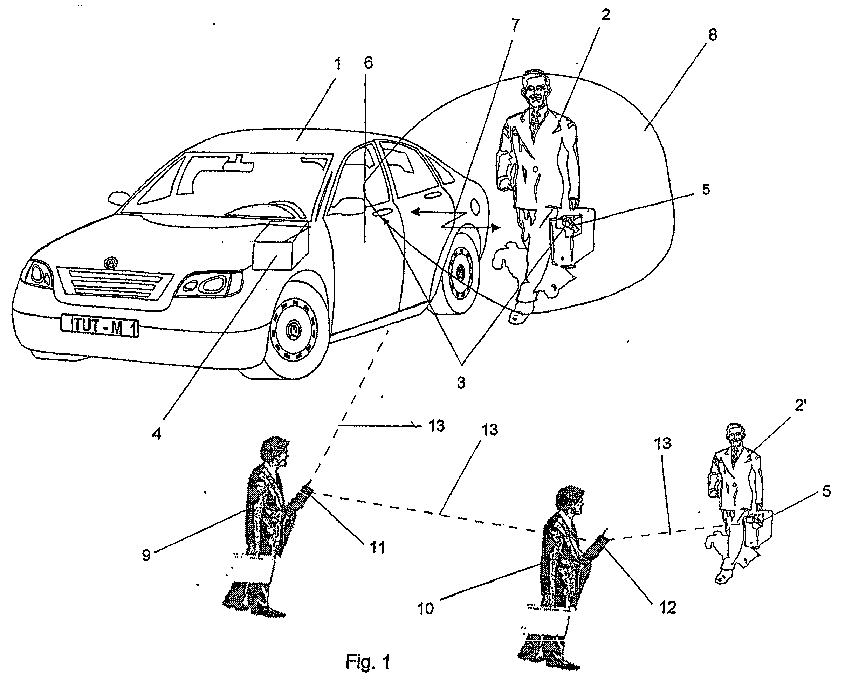

In Fig. 1 ist ein Kraftfahrzeug 1 mit dem berechtigten Benutzer 2 zu sehen. Das Kraftfahrzeug 1 ist mit einem Schließsystem 3 als Türschließsystem versehen, das eine Steuereinrichtung 4 und einen zugehörigen elektronischen Schlüssel 5 umfaßt. Der elektronische Schlüssel 5 befindet sich im Besitz des berechtigten Benutzers 2, womit dieser innerhalb eines Wirkbereichs 8 Zugang zum Kraftfahrzeug 1 besitzt.

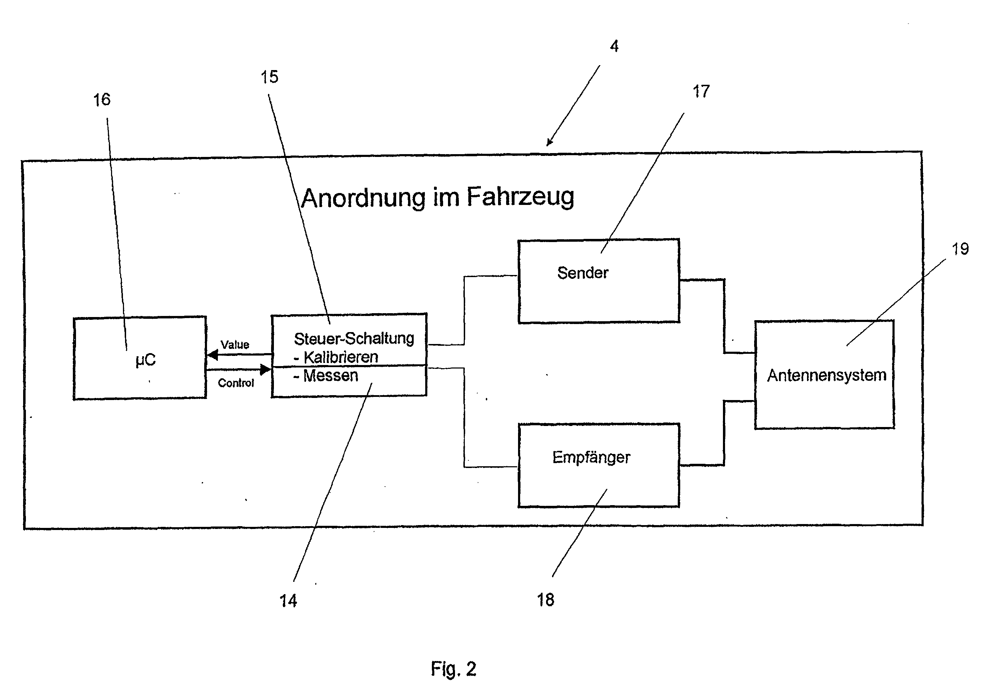

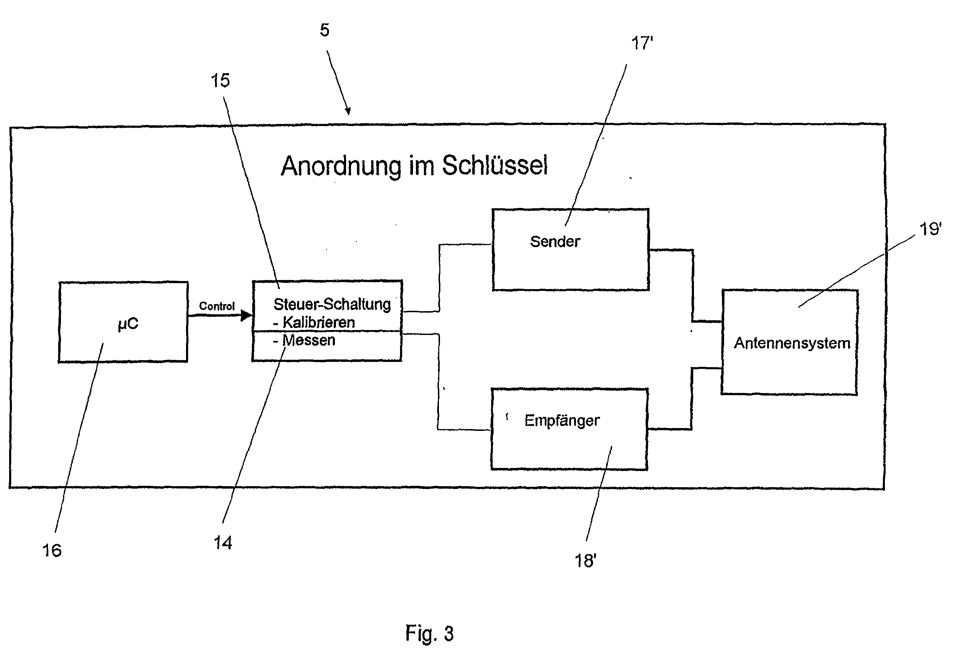

Die Steuereinrichtung 4 besitzt wenigstens zwei Zustände, wobei im ersten Zustand eine Verriegelung und im zweiten Zustand eine Entriegelung der Autotüren 6 vorliegt. Die Steuereinrichtung 4 und der Schlüssel 5 besitzen zu deren bestimmungsgemäßen Betrieb Mittel zum Senden und/oder Empfangen von Signalen. Die Mittel zum Senden und Empfangen von Signalen bestehen jeweils aus einem Sender 17, 17', einem Empfänger 18, 18' und einem Antennensystem 19, 19', wie anhand von Fig. 2 für die Steuereinrichtung 4 und anhand von Fig. 3 für den Schlüssel 5 näher hervorgeht. Bei wenigstens einem dieser zwischen dem Schlüssel 5 und der Steuereinrichtung 4 übertragenen Signale handelt es sich gemäß Fig. 1 um ein codiertes Betriebssignal 7. Bei berechtigtem Schlüssel 5 ist nach positiver Auswertung des übertragenen Betriebssignals 7 eine Änderung des Zustandes der Steuereinrichtung 4 bewirkbar.

In Fig. 1 ist weiter eine Situation gezeigt, in der sich zwei nichtberechtigte Personen 9, 10 Zugang zum Kraftfahrzeug 1 verschaffen wollen, nachdem der berechtigte Benutzer 2' den Wirkbereich 8 verlassen hat. Dazu befindet sich die erste Person 9 mit einem präparierten elektronischen Schlüssel 11 in der Nähe des Kraftfahrzeugs 1, während sich die zweite Person 10 mit einer präparierten Steuereinrichtung 12 in der Nähe des berechtigten Benutzers 2' aufhält. Mittels der präparierten Steuereinrichtung 12 wird der vom berechtigten Benutzer 2' getragene Schlüssel 5 aktiviert, so daß eine Übertragung von Betriebssignalen 13 zwischen der präparierten Steuereinrichtung 12 und dem Schlüssel 5 stattfindet. Die Betriebssignale 13 werden nun zwischen der präparierten Steuereinrichtung 12 und der Steuereinrichtung 4 im Kraftfahrzeug 1 über den präparierten Schlüssel 11 weitergeleitet, so daß die Zustandsänderung der Steuereinrichtung 4 erfolgt, ohne daß dies vom Benutzer 2' wahrgenommen würde.

Um einen solchen Zugang von nichtberechtigten Benutzern 9, 10 zum Kraftfahrzeug 1 zu verhindern, wird zwischen dem Schlüssel 5 und der Steuereinrichtung 4 ein Signal übertragen und ein der gesamten Laufzeit des Signals entsprechender Meßwert bestimmt. Zur Ermittlung des Meßwertes enthalten die Steuereinrichtung 4 und/oder der Schlüssel 5 entsprechende Mittel 14, wie in Fig. 2 und 3 zu sehen ist. Anhand dieses Meßwertes wird festgestellt, ob das Signal aus dem Wirkbereich 8 oder außerhalb des Wirkbereichs 8 herrührt. Die Änderung des Zustandes der Steuereinrichtung 4 wird lediglich dann bewirkt, wenn der Meßwert innerhalb eines vorgegebenen Wertebereichs liegt, d.h. wenn das Signal tatsächlich aus dem Wirkbereich 8 stammt, wobei zum Vergleich in der Steuereinrichtung 4 und/oder im Schlüssel 5 ein in Fig. 2 und 3 gezeigter Mikroprozessor 16 verwendet wird. Zweckmäßigerweise kann das Signal zur Bestimmung des Meßwertes für die Laufzeit innerhalb des Protokolls zur Übertragung des Betriebssignals 7 angeordnet sein. Dabei kann es sich anbieten, dieses Signal an variierbarer Stelle im Protokoll anzuordnen, um so die Manipulationssicherheit weiterhin zu erhöhen.

Weitere Ausgestaltungen der Mittel zur Bestimmung des Meßwertes sind nachfolgend näher erläutert.

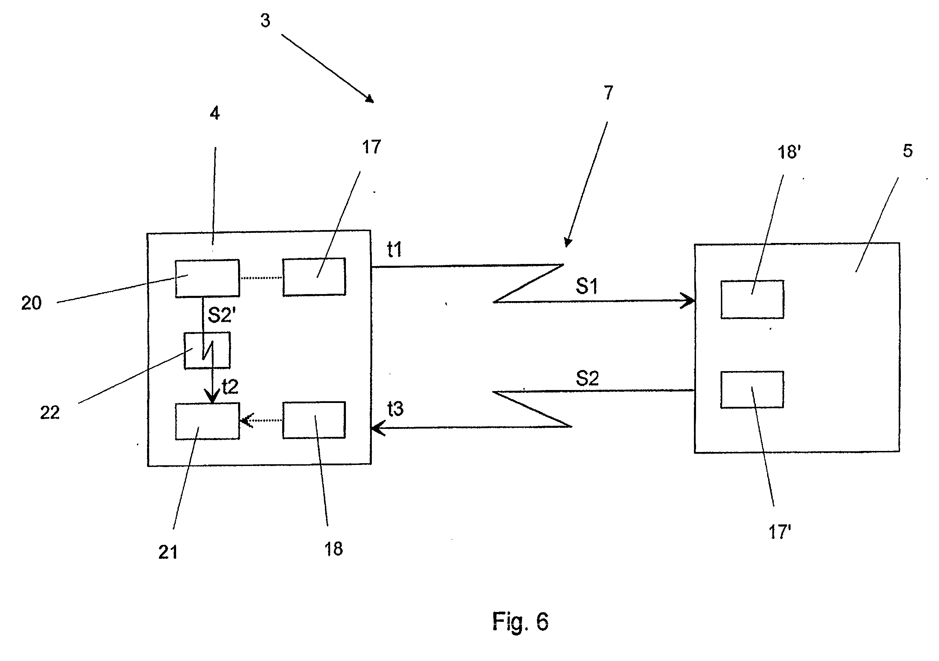

Das Schließsystem 3 entsprechend einer weiteren Ausführung ist als Blockschaltbild in Fig. 6 zu sehen. Die Steuereinrichtung 4 besitzt Mittel 17 zum Senden eines ersten Betriebssignals S1 zu einem ersten Zeitpunkt t1. Korrespondierend hierzu besitzt der Schlüssel 5 Mittel 18' zum Empfangen des ersten Betriebssignals S1. In der Steuereinrichtung 4 befinden sich Mittel 20 zur Erzeugung eines erwarteten zweiten Betriebssignals S2' zu einem zweiten Zeitpunkt t2. Zu diesem Zeitpunkt t2 wird der Empfang eines vom Schlüssel 5 aufgrund des ersten Betriebssignals S1 über Mittel 17' zum Senden gesendeten zweiten Betriebssignals S2 erwartet. In der Steuereinrichtung 4 befinden sich weiter Mittel 18 zum Empfangen des zweiten Betriebssignals S2 vom Schlüssel 5 zu einem dritten Zeitpunkt t3. Die Mittel 20 zur Erzeugung des erwarteten zweiten Betriebssignals S2' sowie die Mittel 18 zum Empfangen des zweiten Betriebssignals S2 stehen in der Steuereinrichtung 4 mit einem Mittel 21 zum Vergleich des erwarteten Betriebssignals S2' mit dem empfangenen Betriebssignal S2 in Verbindung. Von dem Mittel 21 zum Vergleich ist der Grad der Übereinstimmung am dritten Zeitpunkt t3 zwischen dem erwarteten zweiten Betriebssignal S2' und dem empfangenen zweiten Betriebssignal S2 feststellbar. Die Änderung des Zustandes der Steuereinrichtung 4 ist lediglich dann bewirkbar, wenn ein bestimmter Grad an Übereinstimmung vorliegt. Die Mittel zur Bestimmung des Meßwertes bestehen bei dieser Ausführung also aus den Mitteln 17, den Mitteln 20, den Mitteln 18 und den Mitteln 21. Als Meßwert bestimmen diese Mittel 17, 20, 18 und 21 die Phasenlage zwischen dem übertragenen und dem erwarteten Betriebssignal S2, S2'.

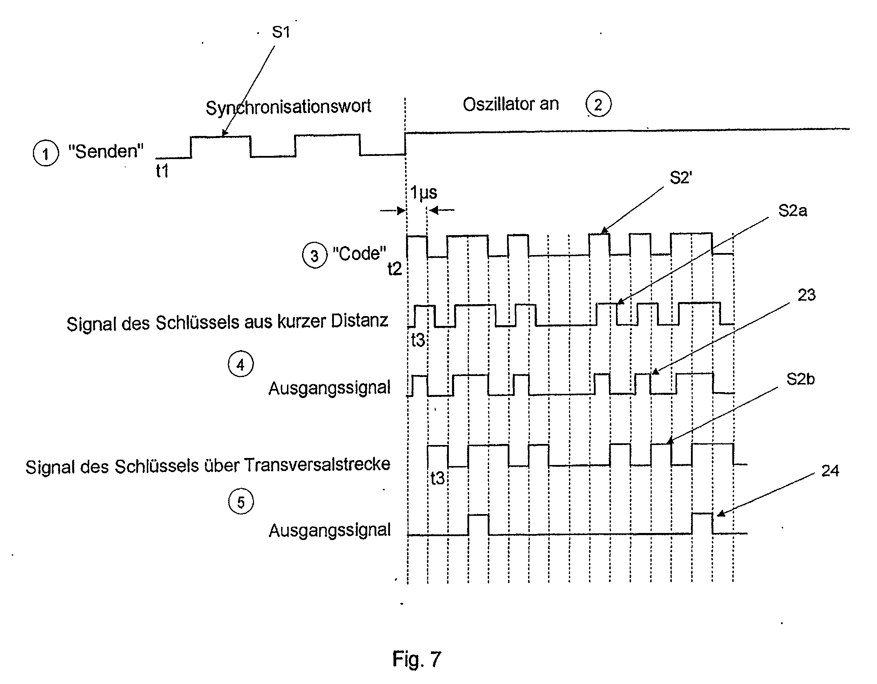

Die Betriebsweise des Schließsystems 3 nach der weiteren Ausführung wird anhand der Fig. 6 und 7 deutlich. Von der Steuereinrichtung 4 wird durch die Mittel 17 ein erstes Betriebssignal S1 in der Art eines Synchronisationssignals zu einem ersten Zeitpunkt t1 gesendet. Das erste Betriebssignal S1 kann periodisch oder auch bei Annäherung eines Benutzers 2 an das Kraftfahrzeug 1 gesendet werden. Befindet sich der Benutzer 2 mitsamt dem berechtigten Schlüssel 5 im Wirkbereich 8 (siehe Fig. 1), so empfängt der Schlüssel 5 das erste Betriebssignal S1 und sendet aufgrund des Empfangs des ersten Betriebssignals S1 ein zweites Betriebssignal S2 in der Art eines Berechtigungssignals über die Mittel 17'. Zwischenzeitlich ist in der Steuereinrichtung 4 ein zu einem zweiten Zeitpunkt t2 vom Schlüssel 5 erwartetes zweites Betriebssignal S2' erzeugt worden. Das zweite Betriebssignal S2 wird von der Steuereinrichtung 4 beginnend an einem dritten Zeitpunkt t3 von den Mitteln 18 empfangen. Nunmehr erfolgt ein Vergleich des zum dritten Zeitpunkt t3 vorliegenden Teils des erwarteten zweiten Betriebssignals S2' mit dem zweiten Betriebssignal S2 im Mittel 21.

Stammen die Betriebssignale 7 aus dem Wirkbereich 8, so unterscheidet sich das zweite Betriebssignal S2 am dritten Zeitpunkt t3 allenfalls geringfügig vom erwarteten Betriebssignal S2', d.h. es ist allenfalls eine kleine Phasenverschiebung vorhanden, wie anhand des Betriebssignals S2a in Fig. 7 ersichtlich ist. Die geringfügigen Unterschiede rühren je nach Standort des Schlüssels 5 innerhalb des Wirkbereichs 8 her. Kommen die Betriebssignale 13 hingegen von außerhalb des Wirkbereichs 8 durch die in Fig. 1 dargestellte Übertragungsstrecke über die nichtberechtigten Personen 9, 10, so resultiert aufgrund der verlängerten Laufzeit der Betriebssignale 13 ein deutlich vom erwarteten zweiten Betriebssignal S2' am dritten Zeitpunkt t3 verschiedenes zweites Betriebssignal S2, d.h. es tritt eine deutliche Phasenverschiebung auf, wie man anhand des Betriebssignals S2b in Fig. 7 sieht. Anhand dieser Unterscheidung läßt sich erkennen, ob das zweite Betriebssignal S2 aus dem Wirkbereich 8 stammt, so daß die Zustandsänderung der Steuereinrichtung 4 lediglich dann bewirkt wird, wenn der Vergleich des erwarteten zweiten Betriebssignals S2' mit dem zweiten Betriebssignal S2 am dritten Zeitpunkt t3 einen bestimmten Grad an Übereinstimmung ergibt.

Zur Kompensation der Laufzeit des ersten Betriebssignals S1 und/oder des zweiten Betriebssignals S2 im Wirkbereich 8 können in weiterer Ausgestaltung die Mittel 20 zur Erzeugung des erwarteten zweiten Betriebssignals S2' zu einem zweiten Zeitpunkt t2 ein Verzögerungsmittel 22 umfassen, wie aus Fig. 6 hervorgeht. Das erwartete zweite Betriebssignal S2' kann damit bereits am ersten Zeitpunkt t1 zeitgleich mit dem ersten Betriebssignal S1 erzeugbar sein. Das Verzögerungsmittel 22 bewirkt dann, daß das erwartete zweite Betriebssignal S2' verzögert und damit zum erforderlichen Zeitpunkt, nämlich in etwa am zweiten Zeitpunkt t2, den Mitteln 21 zum Vergleich zuführbar ist.

Während und/oder nach dem Senden des ersten Betriebssignals S1 zum Zeitpunkt t1 wird in der Steuereinrichtung 4 dann das vom zugehörigen Schlüssel 5 erwartete zweite Betriebssignal S2' erzeugt. Das erwartete zweite Betriebssignal S2' wird im Verzögerungsmittel 22 in etwa um die zwischen dem zweiten Zeitpunkt t2 und dem ersten Zeitpunkt t1 vorliegende Zeitspanne Tv=t2-t1 verzögert. Die Verzögerung mit der Zeitspanne Tv bewirkt damit eine Kompensierung der Laufzeit des ersten Betriebssignals S1 bis zum Schlüssel 5 und/oder der Reaktionszeit des Schlüssels 5 und/oder der Rücklaufzeit des zweiten Betriebssignals S2 zur Steuereinrichtung 4 innerhalb des Wirkbereichs 8.

Vorteilhaft ist, wenn der Vergleich zwischen dem zum dritten Zeitpunkt t3 vorliegenden Teil des insbesondere verzögerten, erwarteten zweiten Betriebssignals S2' mit dem empfangenen zweiten Betriebssignal S2 durch eine logische UND-Verknüpfung vorgenommen wird. Das durch die UND-Verknüpfung gewonnene Signal 23 ist in Fig. 7 für die im Wirkbereich 8 übertragenen Betriebssignale 7 zu sehen. Das Signal 23 stimmt im wesentlichen mit dem erwarteten zweiten Betriebssignal S2' überein. Lediglich die Signaldauer für die "High"-Pegel ist gegenüber dem zweiten Betriebssignal S2 geringfügig verkürzt, während die den Code des zweiten Betriebssignals S2 beinhaltende Abfolge von "Low"- und "High"-Pegeln im Signal 23 unverändert ist. Damit wird das Signal 23 als zulässig erkannt. Ein weiteres durch die UND-Verknüpfung gewonnenes Signal 24 für die außerhalb des Wirkbereichs 8 übertragenen Betriebssignale 13 ist ebenfalls in Fig. 7 gezeigt. Das Signal 24 unterscheidet sich wesentlich von dem erwarteten zweiten Betriebssignal S2'. Insbesondere stellt die Abfolge von "Low"- und "High"-Pegeln im Signal 24 einen gegenüber dem zweiten Betriebssignal S2 völligen unterschiedlichen Code dar. Damit wird das Signal 24 als nicht zulässig erkannt.

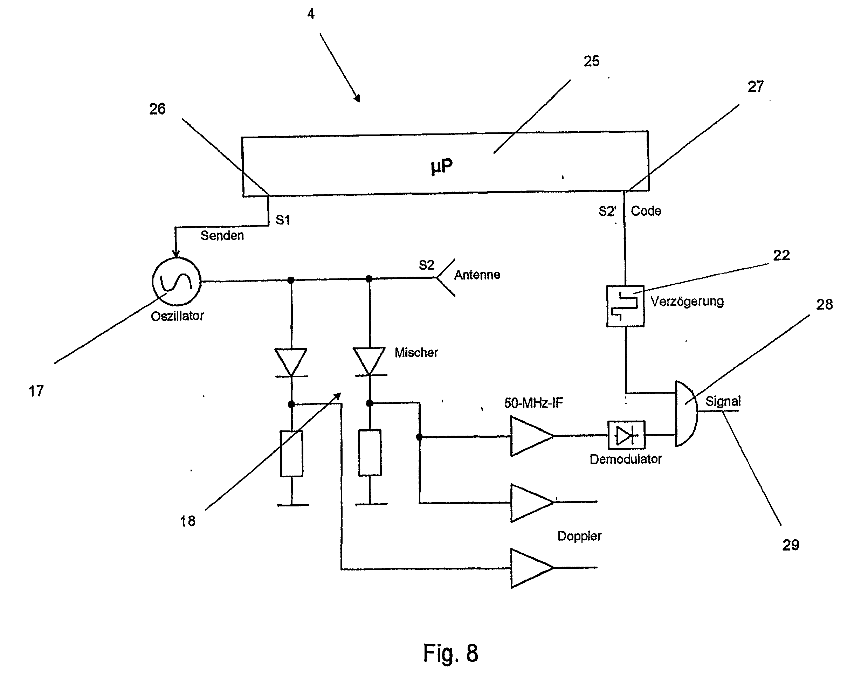

In Fig. 8 ist ein Blockschaltbild für die Ausgestaltung einer Elektronik der Steuereinrichtung 4 näher zu sehen. Die Steuereinrichtung 4 enthält einen Mikroprozessor 25 zur Erzeugung des ersten Betriebssignals S1 und des erwarteten zweiten Betriebssignals S2'. Ein Ausgang 26 des Mikroprozessors 25 für das erste Betriebssignal S1 führt zum Mittel 17 zum Senden. An einem weiteren Ausgang 27 des Mikroprozessors 25 für das erwartete zweite Betriebssignal S2' ist ein Verzögerungsglied 22 angeordnet. Das Verzögerungsglied 22 ist wiederum mit einem Eingang eines logischen UND-Verknüpfungsgliedes 28 verbunden, während der andere Eingang des UND-Verknüpfungsgliedes 28 mit dem Mittel 18 zum Empfangen für das zweite Betriebssignal S2 verbunden ist. Am Ausgang des UND-Verknüpfungsgliedes 28 liegt das Signal 29 zur Zustandsänderung der Steuereinrichtung 4 an.

In einer weiteren Ausführung, die jedoch in den Zeichnungen nicht im Einzelnen gezeigt ist, erfolgt ein direkter Vergleich der Laufzeit der Betriebssignale 7, indem als Meßwert die Zeitdifferenz zwischen dem übertragenen Betriebssignal S2 und dem erwarteten Betriebssignal S2' ermittelt wird.

Wiederum besitzt die Steuereinrichtung 4 Mittel 17 zum Senden eines ersten Betriebssignals S1 zu einem ersten Zeitpunkt t1 sowie Mittel 18 zum Empfangen des zweiten Betriebssignals S2 zu einem dritten Zeitpunkt t3. Weiterhin enthält die Steuereinrichtung 4 Mittel zur Bestimmung eines zweiten Zeitpunktes t2, an dem der Empfang des vom Schlüssel 5 aufgrund des ersten Betriebssignals S1 gesendeten zweiten Betriebssignals S2 erwartet wird und Mittel zum Vergleich des zweiten Zeitpunktes t2 mit dem dritten Zeitpunkt t3.

Wiederum wird für den Betrieb des Schließsystems 3 ein erstes Betriebssignal S1 in der Art eines Synchronisationssignals von der Steuereinrichtung 4 zu einem ersten Zeitpunkt t1 gesendet. Der Schlüssel 5 sendet nach Empfang des ersten Betriebssignals S1 ein zweites Betriebssignal S2 in der Art eines Berechtigungssignals. In der Steuereinrichtung wird dann der vom Wirkbereich 8 abhängige, zweite Zeitpunkt t2 bestimmt, an dem der Empfang des zweiten Betriebssignals S2 erwartet wird. Das zweite Betriebssignal S2 wird anschließend von der Steuereinrichtung 4 beginnend an einem dritten Zeitpunkt t3 empfangen. Die Zustandsänderung der Steuereinrichtung 4 wird zusätzlich zur positiven Auswertung des zweiten Betriebssignals S2 lediglich dann bewirkt, wenn die zwischen dem dritten Zeitpunkt t3 und dem zweiten Zeitpunkt t2 auftretende Zeitspanne Ts=t3-t2 kleiner als ein vorgegebener Schwellwert ist. Der Schwellwert berücksichtigt unterschiedliche Orte des Schlüssels 5 innerhalb des Wirkbereichs 8. Überschreitet die Zeitspanne Ts jedoch den Schwellwert, so befindet sich der Schlüssel 5 außerhalb des Wirkbereichs 8. Somit wird ebenfalls ein nicht zulässiger Versuch erkannt, das Schließsystem 3 mittels der Betriebssignale 13 zu betätigen.

Ist die Zeitspanne Ts größer als der Schwellwert, so liegt folglich eine nicht zulässige Betätigung vor. Es genügt daher, in der Steuereinrichtung 4 lediglich dann eine Auswertung des zweiten Betriebssignals S2 zur Berechtigung des Schlüssels 5 vorzunehmen, falls die Zeitspanne Ts=t3-t2 kleiner als der Schwellwert ist.

Allerdings können Toleranzen in den elektronischen bzw. elektrischen Bauteilen der Steuereinrichtung 4 sowie des Schlüssels 5 zu einer Verfälschung der Laufzeitmessung führen, wenn mit Hilfe der Meßmittel 14 die gesamte Laufzeit des Signals zwischen der Steuereinrichtung 4 und dem Schlüssel 5 gemessen wird. Um solche Verfälschungen zu beseitigen, sind entsprechend einer weiteren Ausgestaltung im Schlüssel 5 und/oder in der Steuereinrichtung 4 zusätzlich Kalibriermittel 15 zur Bestimmung der internen Laufzeit für das Signal angeordnet, wie anhand von Fig. 2 und 3 zu sehen ist. Mit Hilfe der Kalibriermittel 15 läßt sich daher die Eigenlaufzeit des Signals im Schlüssel 5 und/oder in der Steuereinrichtung 4 ermitteln. Weiter befinden sich in der Steuereinrichtung 4 und/oder im Schlüssel 5 noch Korrekturmittel 16, bei denen es sich beispielsweise um einen Mikroprozessor handeln kann. Dadurch kann eine Korrektur der gesamten Laufzeit um die interne Laufzeit für das Signal vorgenommen werden, derart daß die externe bzw. die reine Laufzeit für das zwischen dem Schlüssel 5 und der Steuereinrichtung 4 übertragene Signal bestimmbar ist.

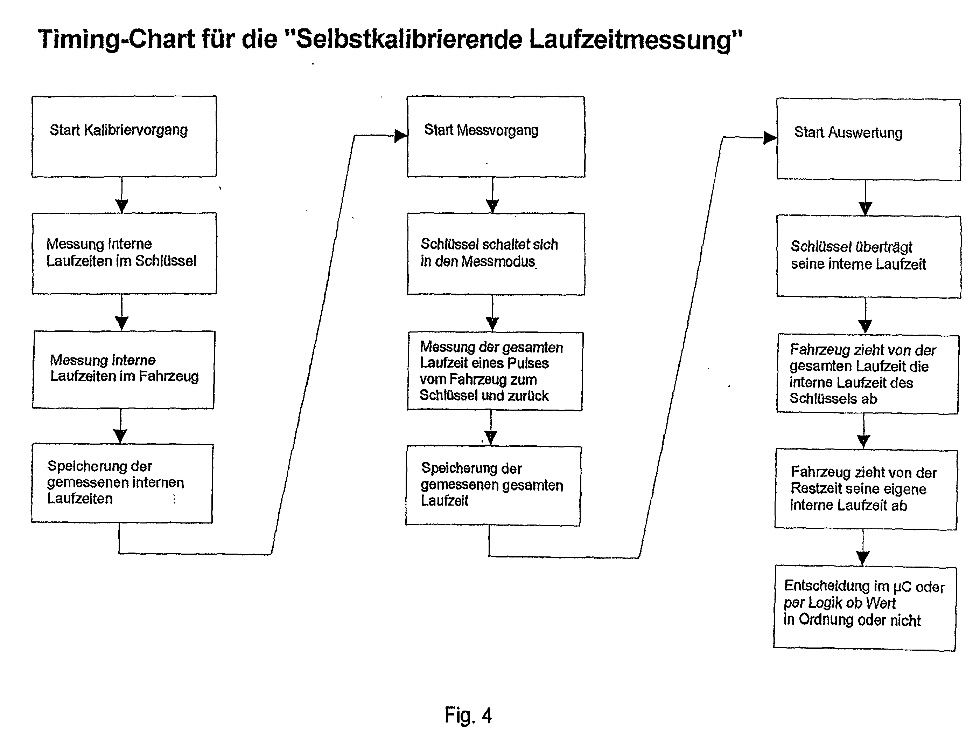

Bei den elektronischen/elektrischen Bauteilen des Senders 17, 17' sowie Empfängers 18, 18' in der Steuereinrichtung 4 und/oder im Schlüssel 5 handelt es sich um Oszillatoren, ZF(Zwischenfrequenz) -Verstärker u. dgl., die durch das Signal aus dem Ruhebetrieb in den bestimmungsgemäßen Betrieb schaltbar sind. Die Kalibriermittel 15 ermitteln die beim Umschalten zwischen dem Ruhebetrieb und dem bestimmungsgemäßen Betrieb auftretende Zeitspanne als interne Laufzeit. Die im Schlüssel 5 ermittelte interne Laufzeit ist im Schlüssel 5 speicherbar. Alternativ oder auch zusätzlich kann die Größe der internen Laufzeit auf die Steuereinrichtung 4 mittels eines Signals, das diese Größe als Information codiert, übertragbar sein. Ebenso ist die in der Steuereinrichtung 4 ermittelte interne Laufzeit in der Steuereinrichtung 4 speicherbar und/oder auf den Schlüssel 5 mittels eines diese Information codierenden Signals übertragbar. In Fig. 4 ist das eigentliche Ablaufdiagramm für die Laufzeitmessung eines zwischen der Steuereinrichtung 4 im Fahrzeug und dem Schlüssel 5 übertragenen Signals mit Kalibrierung näher zu sehen.

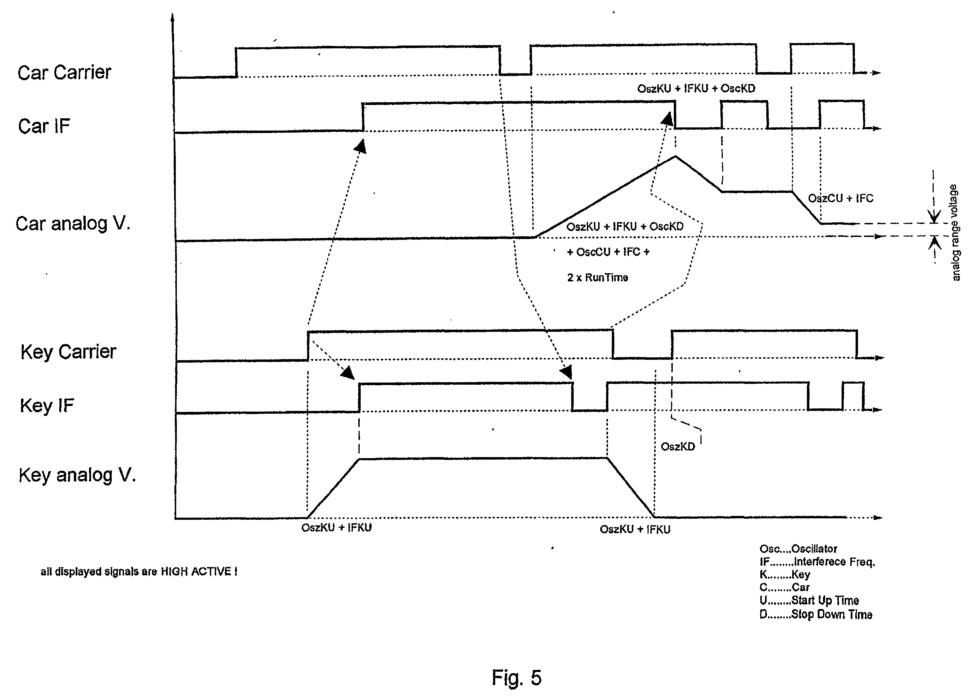

In einer bevorzugten Weiterbildung der Erfindung enthält die Steuereinrichtung 4 und/oder der Schlüssel 5 eine Kapazität in der Form eines Kondensators. In der Kapazität sind die interne Laufzeit sowie die gesamte Laufzeit als Spannungen lad- und/oder entladbarbar. Dabei codiert die Größe der Spannung in der Kapazität die Information zur jeweiligen Laufzeit. Die externe Laufzeit, nämlich die Gesamtlaufzeit abzüglich der Kalibrierungszeit im Schlüssel 5 und in der Steuereinrichtung 4, ergibt sich dann aus der Restspannung des Kondensators nach Übertragung des Signals. In weiterer Ausgestaltung besteht das Signal aus einer Folge von Einzelsignalen. Wenigstens ein Einzelsignal schaltet die Steuereinrichtung 4 und/oder den Schlüssel 5 zwischen dem Ruhebetrieb und dem bestimmungsgemäßen Betrieb um und wenigstens ein weiteres Einzelsignal wird zwischen der Steuereinrichtung 4 und dem Schlüssel 5 übertragen. In Fig. 5 ist ein zugehöriges Zeitdiagramm für den Ablauf der Laufzeitmessung mit Kalbrierung bei dieser Ausgestaltung näher zu sehen.

Zunächst werden in der Steuereinrichtung 4 und im Schlüssel 5 die Kondensatoren entladen. Anschließend sendet die Steuereinrichtung 4 ein Trägersignal (Car Carrier). Der Schlüssel 5 startet seinen Oszillator und beginnt den Kondensator aufzuladen bis das Zwischenfrequenz-Signal (Key IF) des ZF-Verstärkers vorliegt. Anschließend sendet die Steuereinrichtung 4 einen Puls (Mark bit) und beginnt deren Kondensator aufzuladen. Sobald der Schlüssel 5 die ansteigende Flanke des Pulses (Mark bit) detektiert, sendet dieser seinerseits einen Puls (Null-bit) zurück und entlädt seinen Kondensator bis dessen Ladung Null ist. Sobald die Steuereinrichtung 4 den Puls (Null-bit) am Zwischenfrequenzausgang (IF-output) detektiert, beginnt diese deren Kondensator zu entladen. Währenddessen übermittelt der Schlüssel 5 weiter sein Trägersignal (Key Carrier). Die Steuereinrichtung 4 führt einen Reset durch und setzt dann das Trägersignal (Car Carrier) erneut, wobei wiederum die weitere Entladung des Kondensators gestartet wird bis die ansteigende Flanke am Zwischenfrequenzausgang (IF-output) detektiert wird. Die dann noch am Kondensator der Steuereinrichtung 4 anstehende Spannung ist nunmehr proportional zur doppelten Entfernung zwischen der Steuereinrichtung 4 im Fahrzeug und dem Schlüssel 5, wobei auftretende Toleranzen im Schlüssel 5 sowie in der Steuereinrichtung 4 kalibriert sind.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. So kann ein derartiges Schließsystem außer zur Betätigung des Türschließsystems auch zur Ver- und/oder Entriegelung des Zündschlosses, der Lenkradverriegelung o. dgl. im Kraftfahrzeug eingesetzt werden. Im übrigen ist auch eine Verwendung für ein sonstiges Türschloß, das sich beispielsweise an einer Immobilie befindet, möglich.

## Patentansprüche

1. Schließsystem insbesondere für ein Kraftfahrzeug (1), mit einer wenigstens zwei Zustände besitzenden Steuereinrichtung (4), wie einer Steuereinrichtung (4) zur Ent- und/oder Verriegelung der Autotüren (6), des Zündschlosses, der Lenkradverriegelung o. dgl., und einem zugehörigen elektronischen Schlüssel (5), wobei die Steuereinrichtung (4) und der Schlüssel (5) zu deren bestimmungsgemäßen Betrieb Mittel zum Senden (17, 17') und/oder Empfangen (18, 18') von Signalen besitzen, wobei es sich bei wenigstens einem der zwischen dem Schlüssel (5) und der Steuereinrichtung (4) übertragenen Signale um ein codiertes Betriebssignal (7) handelt, so daß nach positiver Auswertung des übertragenen Betriebssignals (7) bei berechtigtem Schlüssel (5) eine Änderung des Zustandes der Steuereinrichtung (4) bewirkbar ist, wobei Mittel zur Bestimmung eines der gesamten Laufzeit für ein zwischen dem Schlüssel (5) und der Steuereinrichtung (4) übertragens Signal entsprechenden Meßwertes in der Steuereinrichtung (4) und/oder im Schlüssel (5) angeordnet sind, und wobei die Änderung des Zustandes der Steuereinrichtung (4) lediglich dann bewirkt wird, wenn der Meßwert innerhalb eines vorgegebenen Wertebereichs liegt, **dadurch gekennzeichnet, daß** die Mittel (17) zum Senden in der Steuereinrichtung (4) ein erstes Betriebssignal S1 zu einem ersten Zeitpunkt t1 senden, daß Mittel (20) in der Steuereinrichtung (4) ein erwartetes zweites Betriebssignal S2' zu einem zweiten Zeitpunkt t2, an dem der Empfang eines vom Schlüssel (5) aufgrund des ersten Betriebssignals S1 gesendeten zweiten Betriebssignals S2 erwartet wird, erzeugen, daß die Mittel (18) zum Empfangen in der Steuereinrichtung (4) ein zweites Betriebssignal S2 vom Schlüssel (5) zu einem dritten Zeitpunkt t3 empfangen, daß Mittel (21) zum Vergleich des erwarteten zweiten Betriebssignals S2' mit dem empfangenen zweiten Betriebssignal S2 in der Steuereinrichtung (4) mit dem Mittel (20) zur Erzeugung des erwarteten zweiten Betriebssignals S2' sowie mit dem Mittel (18) zum Empfangen des zweiten Betriebssignals S2 in Verbindung stehen, derart daß als Meßwert die Phasenlage zwischen dem zweiten Betriebssignal S2 und dem erwarteten zweiten Betriebssignal S2' ermittelt wird, daß der Grad der Übereinstimmung am dritten Zeitpunkt t3 zwischen dem erwarteten zweiten Betriebssignal S2' und dem empfangenen zweiten Betriebssignal S2 von dem Mittel (21) zum Vergleich festgestellt wird, und daß die Änderung des Zustandes der Steuereinrichtung (4) lediglich dann bewirkt wird, wenn ein bestimmter Grad an Übereinstimmung vorliegt.

2. Schließsystem nach Anspruch 1, **dadurch gekennzeichnet, daß** die Mittel (20) zur Erzeugung des erwarteten zweiten Betriebssignals S2' zu einem zweiten Zeitpunkt t2 ein Verzögerungsmittel (22) umfassen, so daß das erwartete zweite Betriebssignal S2' am ersten Zeitpunkt t1 erzeugbar und verzögert in etwa am zweiten Zeitpunkt t2 den Mitteln (21) zum Vergleich zuführbar ist.

3. Schließsystem nach Anspruch 1 oder 2, **dadurch gekennzeichnet, daß** die Steuereinrichtung (4) einen Mikroprozessor (25) zur Erzeugung des ersten Betriebssignals S1 und des erwarteten zweiten Betriebssignals S2' enthält, daß am Ausgang (27) des Mikroprozessors (25) für das erwartete zweite Betriebssignal S2' ein Verzögerungsglied (22) angeordnet ist, daß das Verzögerungsglied (22) mit einem Eingang eines logischen UND-Verknüpfungsgliedes (28) verbunden ist, daß der andere Eingang des UND-Verknüpfungsgliedes (28) mit dem Mittel (18) zum Empfangen für das zweite Betriebssignal S2 verbunden ist, und daß am Ausgang des UND-Verknüpfungsgliedes (28) das Signal (29) zur Zustandsänderung der Steuereinrichtung (4) anliegt.

4. Schließsystem nach Anspruch 1, 2 oder 3, **dadurch gekennzeichnet, daß** Mittel in der Steuereinrichtung (4) den zweiten Zeitpunkt t2, an dem der Empfang des vom Schlüssel (5) aufgrund des ersten Betriebssignals S1 gesendeten zweiten Betriebssignals S2 erwartet wird, bestimmen, daß Mittel zum Vergleich des zweiten Zeitpunktes t2 mit dem dritten Zeitpunkt t3 in der Steuereinrichtung (4) enthalten sind, derart, daß als Meßwert die Zeitdifferenz zwischen dem übertragenen Betriebssignal S2 und dem erwarteten Betriebssignal S2' ermittelbar ist, und daß die Änderung des Zustandes der Steuereinrichtung (4) zusätzlich zur positiven Auswertung des zweiten Betriebssignals S2 lediglich dann bewirkt wird, wenn die zwischen dem dritten Zeitpunkt t3 und dem zweiten Zeitpunkt t2 auftretende Zeitspanne Ts=t3-t2 kleiner als ein vorgegebener Schwellwert ist.

5. Schließsystem nach einem der Ansprüche 1 bis 4, **dadurch gekennzeichnet, daß** das Signal zur Bestimmung des Meßwertes für die Laufzeit innerhalb des Protokolls zur Übertragung des Betriebssignals (7), gegebenenfalls an variierbarer Stelle im Protokoll, übertragbar ist.

6. Schließsystem nach einem der Ansprüche 1 bis 5, **dadurch gekennzeichnet, daß** im Schlüssel (5) und/oder in der Steuereinrichtung (4) Kalibriermittel (15) zur Bestimmung der internen Laufzeit für das Signal angeordnet sind, und daß in der Steuereinrichtung (4) und/oder im Schlüssel (5) Korrekturmittel (16) zur Korrektur der gesamten Laufzeit um die interne Laufzeit für das Signal befindlich sind, derart daß die externe Laufzeit für das zwischen dem Schlüssel (5) und der Steuereinrichtung (4) übertragene Signal bestimmbar ist.

7. Schließsystem nach Anspruch 6, **dadurch gekennzeichnet, daß** die Mittel zum Senden (17, 17') und/oder Empfangen (18, 18') in der Steuereinrichtung (4) und/oder im Schlüssel (5) elektronische/elektrische Bauteile, wie einen Oszillator, einen ZF-Verstärker u. dgl. enthalten, die durch das Signal aus den Ruhebetrieb in den bestimmungsgemäßen Betrieb schaltbar sind, wobei die Kalibriermittel (15) die beim Umschalten zwischen dem Ruhebetrieb und dem bestimmungsgemäßen Betrieb auftretende Zeitspanne als interne Laufzeit ermitteln.

8. Schließsystem nach Anspruch 6 oder 7, **dadurch gekennzeichnet, daß** die im Schlüssel (5) ermittelte interne Laufzeit im Schlüssel (5) speicherbar und/oder auf die Steuereinrichtung (4) mittels eines diese Information codierenden Signals übertragbar ist.

9. Schließsystem nach Anspruch 6, 7 oder 8, **dadurch gekennzeichnet, daß** die in der Steuereinrichtung (4) ermittelte interne Laufzeit in der Steuereinrichtung (4) speicherbar und/oder auf den Schlüssel (5) mittels eines diese Information codierenden Signals übertragbar ist.

10. Schließsystem nach einem der Ansprüche 6 bis 9, **dadurch gekennzeichnet, daß** die Steuereinrichtung (4) und/oder der Schlüssel (5) eine Kapazität enthält, daß in der Kapazität die interne Laufzeit sowie die gesamte Laufzeit als Spannung lad- und/oder entladbar ist, wobei die Größe der Spannung die Information zur jeweiligen Laufzeit codiert, derart daß sich die externe Laufzeit aus der Restspannung des Kondensators nach Übertragung des Signals ergibt.

11. Schließsystem nach einem der Ansprüche 6 bis 10, **dadurch gekennzeichnet, daß** das Signal aus einer Folge von Einzelsignalen besteht, wobei wenigstens ein Einzelsignal die Steuereinrichtung (4) und/oder den Schlüssel (5) zwischen dem Ruhebetrieb und dem bestimmungsgemäßen Betrieb umschaltet und wenigstens ein weiteres Einzelsignal zwischen der Steuereinrichtung (4) und dem Schlüssel (5) übertragen wird.

## Claims

1. Locking system, in particular for a motor vehicle (1), comprising a control device (4) having at least two states, as a control device (4) for unlocking and/or locking the car doors (6), the ignition lock, the steering wheel lock or suchlike, and an associated electronic key (5), wherein the control device (4) and the key (5), for the operation thereof as directed, possess means for transmitting (17, 17') and/or receiving (18, 18') signals, wherein at least one of the signals transmitted between the key (5) and the control device (4) is a coded operating signal (7), so that once the authorised key (5) has positively evaluated the transmitted operating signal (7), the state of the control device (4) may be changed, wherein means for determining a measured value corresponding to the overall execution time for a signal transmitted between the key (5) and the control device (4) are disposed in the control device (4) and/or in the key (5), and wherein the state of the control device (4) is only changed if the measured value lies within a predetermined value range, **characterised in that** the transmitting means (17) transmit a first operating signal S1, in the control device (4), at a first moment t1, **in that** means (20) generate an anticipated second operating signal S2', in the control device (4), at a second moment t2, at which the reception of a second operating signal S2 transmitted from the key (5) on the basis of the first operating signal S1, is anticipated, **in that** the receiving means (18) receive a second operating signal S2 from the key (5), in the control device (4), at a third moment t3, **in that** means (21) for comparing the anticipated second operating signal S2' with the received second operating signal S2 are connected, in the control device (4), to the means (20) for generating the anticipated second operating signal S2', and also to the means (18) for receiving the second operating signal S2, such that the phase position between the second operating signal S2 and the anticipated second operating signal S2' is determined as the measured value, **in that** the degree of correspondence between the anticipated second operating signal S2' and the received second operating signal S2 is established by the comparison means (21) at the third moment t3, and **in that** the state of the control device (4) is only changed if there is a particular degree of correspondence.

2. Locking system according to claim 1, **characterised in that** the means (20) for generating the anticipated second operating signal S2' at a second moment t2 comprise a retarding means (22), so that the anticipated second operating signal S2' may be generated at the first moment t1 and supplied to the comparison means (21) in a delayed manner, at approximately the second moment t2.

3. Locking system according to either claim 1 or claim 2, **characterised in that** the control device (4) contains a microprocessor (25) for generating the first operating signal S1 and the anticipated second operating signal S2', **in that** a retarding member (22) for the anticipated second operating signal S2' is disposed at the output (27) of the microprocessor (25), **in that** the retarding member (22) is connected to an input of a logical AND-connection member (28), **in that** the other input of the AND-connection member (28) is connected to the receiving means (18) for the second operating signal S2, and **in that** the signal (29) for changing the state of the control device (4) is located at the output of the AND-connection member (28).

4. Locking system according to claim 1, 2 or 3, **characterised in that** means in the control device (4) determine the second moment t2, at which the reception of the second operating signal S2, which is transmitted from the key (5) on the basis of the first operating signal S1, **in that** means for comparing the second moment t2 with the third moment t3 are contained in the control device (4), such that the time difference between the transmitted operating signal S2 and the anticipated operating signal S2' may be determined as the measured value, and **in that** the state of the control device (4), further to the positive evaluation of the second operating signal S2, is only changed if the period of time (Ts = t3 - t2) elapsing between the third moment t3 and the second moment t2 is below a predetermined threshold value.

5. Locking system according to any one of claims 1 to 4, **characterised in that** the signal for determining the measured value for the execution time within the protocol for transferring the operating signal (7), is transferable, optionally at a variable position in the protocol.

6. Locking system according to any one of claims 1 to 5, **characterised in that** calibration means (15) for determining the internal execution time for the signal are disposed in the key (5) and/or in the control device (4), and **in that** adjusting means (16) for adjusting the overall execution time by the internal execution time for the signal are located in the control device (4) and/or in the key (5), such that the external execution time for the signal transmitted between the key (5) and the control device (4) may be determined.

7. Locking system according to claim 6, **characterised in that** the transmitting (17, 17') and/or receiving (18, 18') means in the control device (4) and/or in the key (5) contain electronic/electric components, such as an oscillator, an IF amplifier and suchlike, which may be switched, by means of the signal, from non-operation into operation as directed, wherein the calibration means (15) determine the period of time elapsing during the switchover between non-operation and operation as directed, as the internal execution time.

8. Locking system according to either claim 6 or claim 7, **characterised in that** the internal execution time determined in the key (5) may be stored in the key (5), and/or may be transmitted to the control device (4) by means of signal encoding this information.

9. Locking system according to claim 6, 7 or 8, **characterised in that** the internal execution time determined in the control device (4) may be stored in the control device (4), and/or may be transmitted to the key (5) by means of a signal encoding this information.

10. Locking system according to any one of claims 6 to 9, **characterised in that** the control device (4) and/or the key (5) contain(s) a capacitor, **in that**, in the capacitor, the internal execution time and the overall execution time may be charged and/or discharged as a voltage, wherein the size of the voltage encodes the information regarding the respective execution time, such that the external execution time emerges from the residual voltage of the capacitor once the signal has been transmitted.

11. Locking system according to any one of claims 6 to 10, **characterised in that** the signal comprises a sequence of individual signals, wherein at least one individual signal switches the control device (4) and/or the key (5) over between non-operation and operation as directed, and at least one further individual signal is transmitted between the control device (4) and the key (5).

## Revendications

1. Système de verrouillage, notamment pour un véhicule automobile (1), comportant un dispositif de commande (4) possédant au moins deux états, tel qu'un dispositif de commande (4) pour le verrouillage et/ou déverrouillage des portières de voiture (6), de la serrure de contact, du blocage de volant ou analogue, et une clé électronique (5) correspondante, le dispositif de commande (4) et la clé (5) possédant pour leur fonctionnement conforme à la définition des moyens d'émission (17, 17') et/ou de réception (18, 18') de signaux, l'un au moins des signaux transmis entre la clé (5) et le dispositif de commande (4) étant un signal de fonctionnement codé (7), de sorte que, après évaluation positive du signal de fonctionnement (7) transmis lorsque la clé (5) est autorisée, une modification de l'état du dispositif de commande (4) peut être réalisée, des moyens pour déterminer une valeur de mesure correspondant au temps de transfert total pour un signal transmis entre la clé (5) et le dispositif de commande (4) étant agencés dans le dispositif de commande (4) et/ou dans la clé (5), et le changement d'état du dispositif de commande (4) étant réalisé uniquement si la valeur de mesure se situe à l'intérieur d'une plage de valeurs prédéfinie,
**caractérisé en ce que** les moyens d'émission (17) dans le dispositif de commande (4) émettent un premier signal de fonctionnement S1 à un premier instant t1, **en ce que** des moyens (20) dans le dispositif de commande (4) produisent un deuxième signal de fonctionnement attendu S2' à un deuxième instant t2, auquel est attendue la réception d'un deuxième signal de fonctionnement S2 émis par la clé (5) en raison du premier signal de fonctionnement S1, **en ce que** les moyens de réception (18) dans le dispositif de commande (4) reçoivent un deuxième signal de fonctionnement S2 de la clé (5) à un troisième instant t3, **en ce que** des moyens (21) pour comparer le deuxième signal de fonctionnement attendu S2' avec le deuxième signal de fonctionnement reçu S2 dans le dispositif de commande (4) sont reliés aux moyens (20) servant à produire le deuxième signal de fonctionnement attendu S2' ainsi qu'aux moyens (18) servant à recevoir le deuxième signal de fonctionnement S2 de manière à obtenir comme valeur de mesure la position de phase entre le deuxième signal de fonctionnement S2 et le deuxième signal de fonctionnement attendu S2', **en ce que** le degré de concordance au troisième instant t3 entre le deuxième signal de fonctionnement attendu S2' et le deuxième signal de fonctionnement reçu S2 est déterminé par les moyens de comparaison (21) et **en ce que** le changement d'état du dispositif de commande (4) est réalisé uniquement en cas de détermination d'un certain degré de concordance.

2. Système de verrouillage selon la revendication 1,
**caractérisé en ce que** les moyens (20) servant à produire le deuxième signal de fonctionnement attendu S2' à un deuxième instant t2 comprennent un moyen de temporisation (22), de sorte que le deuxième signal de fonctionnement attendu S2' peut être produit au premier instant t1 et transmis aux moyens de comparaison (21) de manière retardée à peu près au deuxième instant t2.

3. Système de verrouillage selon la revendication 1 ou 2,
**caractérisé en ce que** le dispositif de commande (4) comporte un microprocesseur (25) pour la production du premier signal de fonctionnement S1 et du deuxième signal de fonctionnement attendu S2', **en ce que**, à la sortie (27) du microprocesseur (25), est agencé un élément de temporisation (22) pour le deuxième signal de fonctionnement attendu S2', **en ce que** l'élément de temporisation (22) est relié à une entrée d'un opérateur logique ET (28), **en ce que** l'autre entrée de l'opérateur logique ET (28) est reliée aux moyens (18) servant à recevoir le deuxième signal de fonctionnement S2, et **en ce que**, à la sortie de l'opérateur logique ET (28), se trouve le signal (29) servant au changement d'état du dispositif de commande (4).

4. Système de verrouillage selon la revendication 1, 2 ou 3,
**caractérisé en ce que** des moyens dans le dispositif de commande (4) déterminent le deuxième instant t2 auquel est attendue la réception du deuxième signal de fonctionnement S2 émis par la clé (5) en raison du premier signal de fonctionnement S1, **en ce que** des moyens pour comparer le deuxième instant t2 avec le troisième instant t3 sont contenus dans le dispositif de commande (4) de manière à pouvoir obtenir comme valeur de mesure la différence de temps entre le signal de fonctionnement S2 transmis et le signal de fonctionnement S2' attendu, et **en ce que** le changement de l'état du dispositif de commande (4) est réalisé uniquement si, en plus de l'évaluation positive du deuxième signal de fonctionnement S2, l'intervalle de temps Ts = t3 - t2 entre le troisième instant t3 et le deuxième instant t2 est inférieur à une valeur-seuil prédéfinie.

5. Système de verrouillage selon l'une des revendications 1 à 4,
**caractérisé en ce que** le signal servant à déterminer la valeur de mesure du temps de transfert peut être transmis à l'intérieur du protocole de transmission du signal de fonctionnement (7), le cas échéant à une position variable dans le protocole.

6. Système de verrouillage selon l'une des revendications 1 à 5,
**caractérisé en ce que**, dans la clé (5) et/ou dans le dispositif de commande (4), des moyens d'étalonnage (15) sont agencés pour la détermination du temps de transfert interne du signal et **en ce que** des moyens de correction (16) se trouvent dans le dispositif de commande (4) et/ou dans la clé (5) pour corriger le temps de transfert total avec la valeur du temps de transfert interne du signal, de manière à pouvoir déterminer le temps de transfert externe pour le signal transmis entre la clé (5) et le dispositif de commande (4).

7. Système de verrouillage selon la revendication 6,
**caractérisé en ce que** les moyens d'émission (17, 17') et/ou de réception (18, 18') dans le dispositif de commande (4) et/ou dans la clé (5) comportent des composants électroniques/électriques, tels qu'un oscillateur, un amplificateur de fréquence intermédiaire et analogue, qui peuvent être commutés par le signal du mode repos au mode de fonctionnement conforme à la définition, les moyens d'étalonnage (15) déterminant l'intervalle de temps écoulé lors de la commutation entre le mode repos et le mode de fonctionnement conforme à la définition en tant que temps de transfert interne.

8. Système de verrouillage selon la revendication 6 ou 7,
**caractérisé en ce que** le temps de transfert interne déterminé dans la clé (5) peut être mémorisé dans la clé (5) et/ou transmis au dispositif de commande (4) au moyen d'un signal codant cette information.

9. Système de verrouillage selon la revendication 6, 7 ou 8,
**caractérisé en ce que** le temps de transfert interne déterminé dans le dispositif de commande (4) peut être mémorisé dans le dispositif de commande (4) ou transmis à la clé (5) au moyen d'un signal codant cette information.

10. Système de verrouillage selon l'une des revendications 6 à 9,
**caractérisé en ce que** le dispositif de commande (4) et/ou la clé (5) comporte une capacité électrique, **en ce que** dans la capacité électrique le temps de transfert interne ainsi que le temps de transfert total peuvent être chargés et/ou déchargés sous forme de tension, la valeur de la tension codant l'information au sujet du temps de transfert concerné de telle manière que le temps de transfert externe résulte de la tension résiduelle du condensateur après transmission du signal.

11. Système de verrouillage selon l'une des revendications 6 à 10,
**caractérisé en ce que** le signal est composé d'une suite de signaux individuels, au moins un signal individuel commutant le dispositif de commande (4) et/ou la clé (5) entre le mode repos et le mode de fonctionnement conforme à la définition et au moins un autre signal individuel étant transmis entre le dispositif de commande (4) et la clé (5).
